# EUROPÄISCHE PATENTSCHRIFT

(11) **EP 3 483 996 B1**
(45) Veröffentlichungstag und Bekanntmachung des Hinweises auf die Patenterteilung: **07.07.2021**
(21) Anmeldenummer: 18205450.2
(22) Anmeldetag: 09.11.2018
(51) Int. Cl.: H02G 3/06, H02G 3/22

(54) **ANORDNUNG FÜR EINE KABELDURCHFÜHRUNG**
ASSEMBLY FOR A CABLE FEEDTHROUGH
DISPOSITIF POUR UN PASSE-CÂBLE

(30) Priorität: 09.11.2017 DE 202017106818 U
(43) Veröffentlichungstag der Anmeldung: 15.05.2019
(73) Patentinhaber: CONTA-CLIP Verbindungstechnik GmbH, 33161 Hövelhof (DE)
(72) Erfinder: Nowastowski-Stock, Jörg, 32760 Detmold (DE)
(74) Vertreter: Bittner, Thomas L.

(56) Entgegenhaltungen:
- WO-A1-2017/125625
- DE-A1- 10 143 296
- US-A1- 2008 073 120
- US-A1- 2015 083 486

## Beschreibung

Die Erfindung betrifft eine Anordnung für eine Kabeldurchführung.

### Hintergrund

Kabeldurchführungen oder -einführungen dienen dazu, ein oder mehrere Kabel durch einen Durchbruch oder eine Öffnung in einer Gehäusewand in einem Gehäuse einzuführen, beispielsweise einem Schaltschrankgehäuse.

Im Dokument DE 20 2016 102 878 U1 ist beispielhaft eine Kabeltülle für eine Kabeldurchführung offenbart.

Das Dokument WO 2016/177364 A1 beschreibt eine Anordnung mit einer Wanddurchführung für mehrere Kabel. Hierbei werden in einem Gehäuse einer Wanddurchführung mehrere Dichtungselemente angeordnet, die jeweils ein Kabel umlaufend abdichtend aufnehmen.

Im Dokument DE 10 2007 003 752 A1 ist eine Kabeleinführung mit Zugentlastung offenbart. Die umlaufend geschlossene Kabeleinführung weist einen Dichtabschnitt sowie eine hieran angeordnete Zugentlastung auf. Der Dichtabschnitt ist mit einer den Durchbruch in der Kabeleinführung verschließenden Dichtmembran gebildet, die durchstoßen wird, um hierdurch das Kabel zu stecken, welches dann von der Dichtmembran abdichtend umgeben ist. Der Dichtabschnitt ist aus einem weichelastischen Material, wohingegen die Zugentlastung aus einem hartelastischen Material besteht. Beim Anordnen der Kabeleinführung in einem Durchbruch einer Gehäusewand wird die aus dem hartelastischen Material bestehende Zugentlastung in den Durchbruch eingesteckt oder eingeschraubt. Der Dichtabschnitt befindet sich dann außerhalb des Gehäusedurchbruchs, derart, dass Flansche zur Abdichtung auf der Gehäuseinnenseite oder -außenseite benachbart zum Gehäusedurchbruch aufliegen.

Die Erfindung des Dokuments WO 2017/125625 A1 betrifft eine Halte- und Dichtungsvorrichtung für Kabel, die in einen Verteilerkasten einzuführen sind. Die Vorrichtung umfasst ein Dichtungselement, das von zwei in Eingriff bringbaren Teilen gebildet wird. Es umfasst ein äußeres erstes zylindrisches Segment mit einem Gewinde auf der Oberfläche und ein zweites kegelstumpfförmiges Segment, wobei das Gehäuse für das Kabel zumindest in dem zweiten kegelstumpfförmigen Segment zylindrisch geformt ist, wobei das erste zylindrische Segment starr ist und das zweite kegelstumpfförmige Segment flexibel ist.

Dokument US 2015/0083486 A1 betrifft eine geteilte Kabelverschraubung mit einem ersten Körperelement und einem zweiten Körperelement. Das erste und das zweite Körperelement haben jeweils einen Hauptabschnitt und einen Gewindeschaft, der sich vom Hauptabschnitt aus erstreckt. Die Innenfläche jedes Hauptabschnitts weist vertikale Schlitze auf. Die geteilte Kabelverschraubung enthält auch Dichtungsteile mit einer Vielzahl von sich nach außen erstreckenden Rippen.

Im Dokument US 2008/0073120 A1 wird vorgeschlagen, ein elastisches Dichtelement aus zwei durch eine Trennfläche getrennte Dichtelementteile zusammenzusetzen und ein Durchführungselement vorzusehen.

Dokument DE 101 43 296 A1 offenbart eine Kabeldurchführung mit mindestens zwei Teilen und einer Zugentlastung für Kabel oder Leitungen, die in den Teilen untergebracht ist. Es besitzt außerdem eine Einlassöffnung und einer Auslassöffnung für Kabel oder Leitungen. Ein hohler offener Vorsprung bildet die Auslassöffnung und durchquert eine Öffnung einer Wand.

Zur Lösung ist eine Anordnung für eine Kabelwanddurchführung nach dem unabhängigen Schutzanspruch 1 geschaffen. Ausgestaltungen sind Gegenstand von abhängigen Schutzansprüchen.

Nach einem Aspekt ist eine Anordnung für eine Kabelwanddurchführung mit einer Kabeldurchführung geschaffen. Die Kabeldurchführung weist einen Dichtabschnitt aus einer Kunststoff-Weichkomponente, welcher in Längsrichtung einen Durchbruch zum dichtenden Aufnehmen eines durch eine Gehäusewand durchzuführenden Kabels aufweist, und eine Zugentlastung aus einer Kunststoff-Hartkomponente auf, die an den Dichtabschnitt einstückig angeformt ist und in Längsrichtung einen Durchgang für das durchzuführende Kabel aufweist, welcher mit dem Durchbruch fluchtet. Die Kabeldurchführung weist weiterhin eine Schlitzung auf, die sich in Längsrichtung der Kabeldurchführung über den Dichtabschnitt und die Zugentlastung erstreckt und durch die das durchzuführende Kabel von außerhalb in dem Durchbruch und dem Durchgang aus einer Richtung quer zur Längsrichtung eingeführt werden kann.

Auf diese Weise ist es ermöglicht, dass durch die Gehäusewand hindurchzuführende Kabel in der Kabeldurchführung nicht nur dadurch einzuführen, dass das Kabel stirnseitig eingesteckt wird, sondern auch von der Seite durch die Schlitzung, welche die Kabeldurchführung aufweist. Auf diese Weise ist es insbesondere ermöglicht, die Kabeldurchführung auch für vorkonfektionierte Kabel einzusetzen, bei denen an dem Kabel zumindest an einer Endseite ein elektrisches Bauteil oder -element vormontiert ist. Auf einfache Weise kann die Kabeldurchführung im Bereich der Schlitzung geöffnet werden, um das Kabel einzulegen oder einzuführen, insbesondere von der Seite.

Die Kabeldurchführung kann mehrteilig ausgeführt sein, derart, dass Bauteilhälften der Kabeldurchführung jeweils eine Hälfte des Dichtabschnitts und eine hiermit einstückig verbundene Hälfte der Zugentlastung aufweisen. Die Kabeldurchführung kann zwei oder mehr Bauteilhälften aufweisen, die dann jeweils eine Hälfte des Dichtabschnitts und eine hiermit eine einstückig verbundene Hälfte der Zugentlastung aufweisen. Die Bauteilhälften sind mittels weiterer Schlitzungen getrennt. Mit Hilfe des Zusammensetzens oder Zusammenfügens bilden die Bauteilhälften die Kabeldurchführung aus. An Bauteilhälften, die hierbei miteinander verbunden werden, können Zentriereinrichtungen vorgesehen sein, mit denen die Relativlage der miteinander verbundenen Bauteilhälften festgelegt ist. In einer Ausführungsform kann die Zentriereinrichtung einen Vorsprung an einer Bauteilhälfte und eine zugeordnete Aufnahme für den Vorsprung an einer gegenüberliegenden Bauteilhälfte aufweisen. Die Zentriereinrichtung, beispielsweise der Vorsprung kann aus der Kunststoff-Hartkomponente bestehen. In einer Ausführungsform besteht die Kabeldurchführung aus genau zwei Bauteilhälften, die zum Beispiel als zwei Halbschalen ausgebildet sind.

Die Bauteilhälften können mittels einer Steckverbindung lösbar miteinander verbunden sein.

Zum Ausbilden der Steckverbindung können einander zugeordnete Steckverbinder an dem Dichtabschnitt und / oder an der Zugentlastung angeordnet sein. Die zugeordneten Steckverbinder können zum Beispiel einander zugeordnete Schnappverbinder sein.

Die einander zugeordneten Steckverbinder können aus der Kunststoff-Hartkomponente gebildet sein.

Die Bauteilhälften können mittels einer Scharnierverbindung schwenkbar miteinander verbunden sein. Im Zusammenhang mit der Scharnierverbindung kann vorgesehen sein, dass die Kabeldurchführung eine Sicherungseinrichtung aufweist, mit der die Scharnierverbindung gegen ein unbeabsichtigtes Öffnen gesichert ist, zum Beispiel mit einer Schnappsicherung, bei der einander zugeordnete Sicherungselemente einschnappen, wenn die Bauteilhälften miteinander verbunden sind. Die Schnappsicherung ist lösbar, um die Scharnierverbindung aufzuschwenken. Die Scharnierverbindung kann mit Filmscharnieren gebildet sein, die sich in Längsrichtung an der Kabeldurchführung benachbart zu einer der Schlitzungen erstrecken. Die Scharnierverbindung kann zumindest teilweise aus der Kunststoff-Weichkomponente sein. Alternativ oder ergänzend kann die Scharnierverbindung aus der Kunststoff-Hartkomponente bestehen.

Die Kabeldurchführung kann als ein Zwei-Komponenten-Spritzgussbauteil ausgeführt sein. Bei dieser oder anderen Ausführungsformen kann es sich bei der Kunststoff-Weichkomponente und der Kunststoff-Hartkomponente um verträgliche Kunststoff-Werkstoffe handeln.

Ein Verankerungsabschnitt der Zugentlastung kann an dem Dichtabschnitt angeordnet und dort wenigstens teilweise von der Kunststoff-Weichkomponente eingeschlossen sein. Der Verankerungsabschnitt, der ein- oder mehrstückig gebildet sein kann, kann im Wesentlichen vollständig von der Kunststoff-Weichkomponente umschlossen sein.

Der Verankerungsabschnitt kann im Dichtabschnitt den Durchbruch radial umgreifen. Der Verankerungsabschnitt kann den Durchbruch umlaufend geschlossen oder unterbrochen radial umgreifen.

Zumindest ein Teil der einander zugeordneten Steckverbinder kann im Dichtabschnitt an dem Verankerungsabschnitt angeformt sein. Der oder die einander zugeordneten Steckverbinder können an dem Verankerungsabschnitt einstückig angeformt sein.

Die Zugentlastung kann um den Durchgang herum angeordnete Zugentlastungsklauen aufweisen. Die Zugentlastungsklauen können gegen ein Aufweiten des Durchgangs im Bereich der Zugentlastungsklauen elastisch vorgespannt sein, beispielsweise mithilfe eines oder mehrerer jeweiliger Federarme, mit denen die Zugentlastungsklauen gebildet sind. Um den Durchgang herum können zum Beispiel 3, 4 oder 5 Zugentlastungsklauen angeordnet sein, insbesondere in äquidistanten Abständen, die jeweils ein oder mehrere Federarme aufweisen können.

Die Zugentlastungsklauen können sich auf einer vom Durchgang abgewandten Rückseite auf einem Versteifungselement der Zugentlastung abstützen. Das Versteifungselement kann mit einem Versteifungskäfig gebildet sein, der Versteifungsstreben und hierzwischen angeordnete Öffnungen oder Durchbrüche aufweist, die wahlweise das in der Kabeldurchführung angeordnete Kabel von außen einsehbar machen können.

Die Zugentlastungsklauen können mittels eines Anschlags an einem zugeordneten nachgebenden Stützelement aus der Kunststoff-Weichkomponente gegen ein Aufweiten des Durchgangs im Bereich der Zugentlastungsklauen vorgespannt sein. Das nachgebende Stützelement kann um den Durchgang herum umlaufend durchgehend oder unterbrochen gebildet sein. Das nachgebende Stützelement kann sich seinerseits auf dem Versteifungselement abstützen, beispielsweise indem es hieran angeordnet ist.

Der Dichtabschnitt kann in einem Durchbruch einer Gehäusewand angeordnet sein. Während der Dichtabschnitt in dem Durchbruch der Gehäusewand selbst angeordnet ist, kann die Zugentlastung teilweise oder vollständig außerhalb des Durchbruchs der Gehäusewand auf der einen oder der anderen Seite der Gehäusewand angeordnet sein. Hierbei kann die Zugentlastung frei von einem Kontakt mit der Gehäusewand angeordnet sein, insbesondere frei von einer Abstützung auf der Gehäusewand, zum Beispiel im Bereich des Durchbruchs der Gehäusewand. Außen umlaufende Oberflächenabschnitte des Dichtabschnitts können in direktem Kontakt mit Wandabschnitten im Bereich des Durchbruchs der Gehäusewand stehen und so eine Dichtung zur Gehäusewand ausbilden. Alternativ kann vorgesehen sein, den Dichtabschnitt in einem Rahmen einer Wanddurchführung anzuordnen, wobei in dem Rahmen ein Rasterbauteil angeordnet sein kann, mit dem innerhalb des Rahmens mehrere Aufnahmetaschen für Dichtabschnitte von Kabeldurchführungen bereitgestellt sind. Eine Wanddurchführung als solche ist beispielsweise aus dem Dokument WO 2016/177364 A1 bekannt.

In der Anordnung kann ein vorkonfektioniertes Kabel angeordnet sein, welches sich durch den Durchbruch des Dichtabschnitts und den Durchgang der Zugentlastung erstreckt.

### Beschreibung von Ausführungsbeispielen

Im Folgenden werden weitere Ausführungsbeispiele unter Bezugnahme auf Figuren einer Zeichnung erläutert. Hierbei zeigen:
- Fig. 1: perspektivische Darstellungen einer Kabeldurchführung;
- Fig. 2: eine perspektivische Darstellung einer weiteren Kabeldurchführung mit zwei Bauteilhälften, die voneinander getrennt sind;
- Fig. 3: eine perspektivische Darstellung einer Bauteilhälfte für die weitere Kabeldurchführung in Fig. 2;
- Fig. 4: eine perspektivische Darstellung einer Kabeldurchführung mit eingeführtem Kabel;
- Fig. 5: eine Schnittdarstellung der Kabeldurchführung aus Fig. 4 mit eingeführtem Kabel und
- Fig. 6: eine perspektivische Darstellung einer Anordnung mit einer Wanddurchführung, in die eine Kabeldurchführung integriert ist

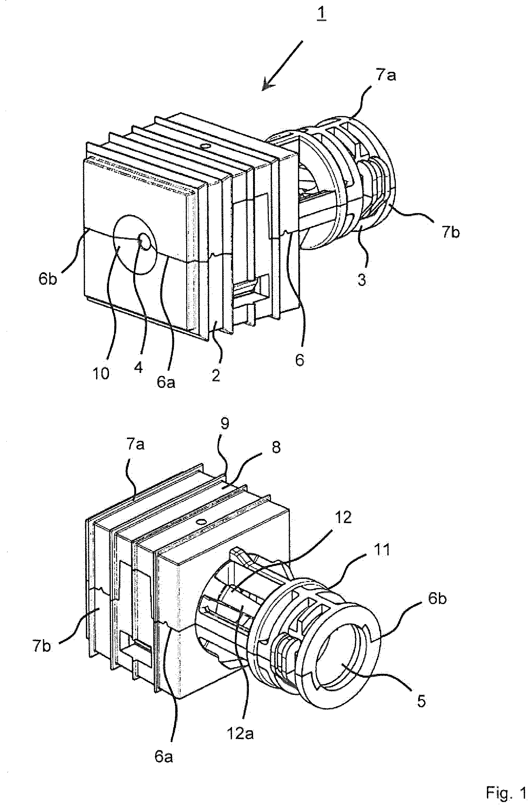

Fig. 1 zeigt schematische Darstellungen einer Kabeldurchführung 1, die einen Dichtabschnitt 2 aus einer Kunststoff-Weichkomponente sowie eine hieran einstückig angeformte Zugentlastung 3 aufweist. Das Dichtelement 2 weist einen Durchbruch 4 zur abdichtenden Aufnahme eines Kabels auf, insbesondere eines vorkonfektionierten Kabels, bei dem an zumindest einer Endseite des Kabels ein elektrisches oder elektronisches Bauteil oder Bauelement montiert ist. Die Zugentlastung 3 weist entlang ihrer Längsrichtung einen Durchgang 5 zur Aufnahme des Kabels auf, welcher mit dem Durchbruch 4 fluchtet. Über den Dichtabschnitt 2 und die Zugentlastung 3 erstreckt sich eine Schlitzung 6, die bei der gezeigten Ausführungsform mit Teilschlitzungen 6a, 6b gebildet ist, sodass zwei Bauteilhälften 7a, 7b hergestellt sind, die lösbar miteinander verbunden sind.

Das Dichtelement 2 weist auf einer äußeren Oberfläche 8 Dichtlippen 9 auf, die bei der gezeigten Ausführungsform umlaufend durchgehend ausgeführt sind. Den Durchbruch 4 umgeben innere Dichtlippen 10.

Im Bereich der Zugentlastung 3 ist ein Versteifungskäfig 11 ausgebildet, welcher den Durchgang 5 radial umgreift.

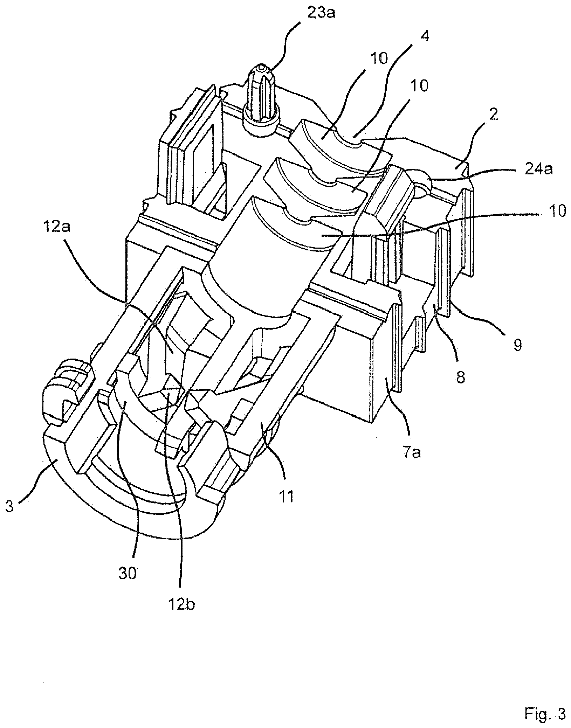

Die Zugentlastung 3 weist Zugentlastungsklauen 12 auf, die vereinzelt um den Durchgang 5 herum angeordnet sind und bei der gezeigten Ausführungsform jeweils einen Federarm 12a sowie eine Klaue 12b (vgl. Fig. 3) aufweisen.

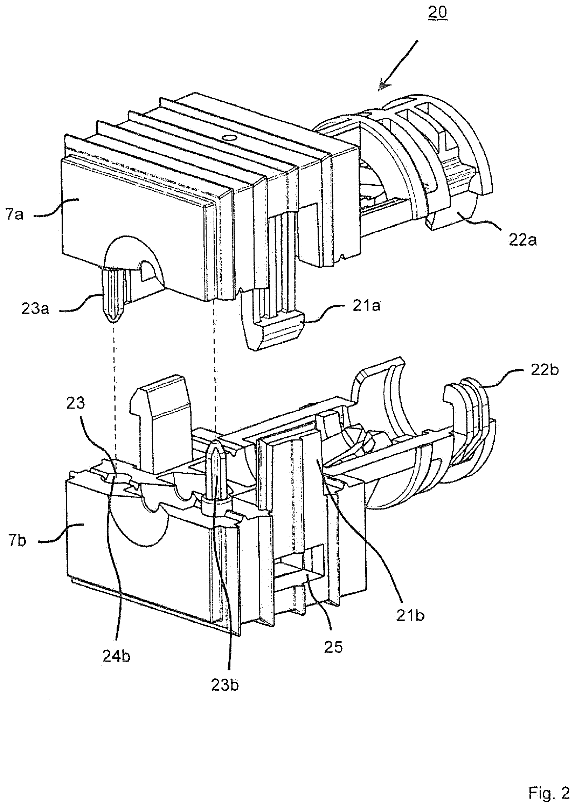

Fig. 2 zeigt eine weitere Kabeldurchführung 20. Für gleiche Merkmale werden in Fig. 2 dieselben Bezugszeichen wie in Fig. 1 verwendet. Bei der weiteren Kabeldurchführung 20 sind die Bauteilhälften 7a, 7b voneinander getrennt. Fig. 3 zeigt eine perspektivische Darstellung der Bauteilhälfte 7a von schräg oben. Die Bauteilhälften 7a, 7b sind mithilfe einer Steckverbindung lösbar miteinander verbunden, wobei an den Bauteilhälften 7a, 7b im Bereich des Dichtelements 2 zugeordnete Steckverbinder 21a, 21b sowie im Bereich der Zugentlastung 3 weitere zugeordnete Steckverbinder 22a, 22b angeordnet sind. Die Steckverbinder 21a, 221b sowie die weiteren Steckverbinder 22a, 22b sind jeweils als Schnappverbinder ausgeführt bei der gezeigten Ausgestaltung. Steckverbinder 21a, 21b und weitere Steckverbinder 22a, 22b sind an den Bauteilhälften 7a, 7b jeweils auf gegenüberliegenden Seiten ausgebildet.

Zur Sicherung und Festlegung der Relativlage der Bauteilhälften 7a, 7b ist eine Zentriereinrichtung 23 mit Zentrierstiften 23a, 23b vorgesehen. Beim Zusammenfügen der Bauteilhälften 7a, 7b wird der Zentrierstift 23a in einer zugordneten Aufnahme 24 angeordnet.
Die Steckverbinder 21a, 21b sowie die Zentrierstifte 23a, 23b können aus der Kunststoff-Hartkomponente gebildet sein. Alternativ kann vorgesehen sein, die Steckverbinder 21a, 21b zumindest zum Teil aus der Kunststoff-Weichkomponente herzustellen, beispielsweise den Steckverbinder 21b mit einer zugeordneten Öffnung 25.

Fig. 3 zeigt eine perspektivischen Darstellung der Bauteilhälfte 7a von oben. Es ergibt sich, dass die Zugentlastungsklauen 12 im Bereich der Klaue 12b rückseitig an einem Stützelement 30 abgestützt sind, welches aus der Kunststoff-Weichkomponente bestehen kann und dann nachgebend ausgeführt ist, wobei sich das Stützelement 30 seinerseits am Versteifungskäfig 11 abstützt. Gemäß Fig. 3 sind im Bereich des Durchbruchs 4 mehrere innere Dichtlippen 10 in axialer Richtung hintereinander angeordnet.

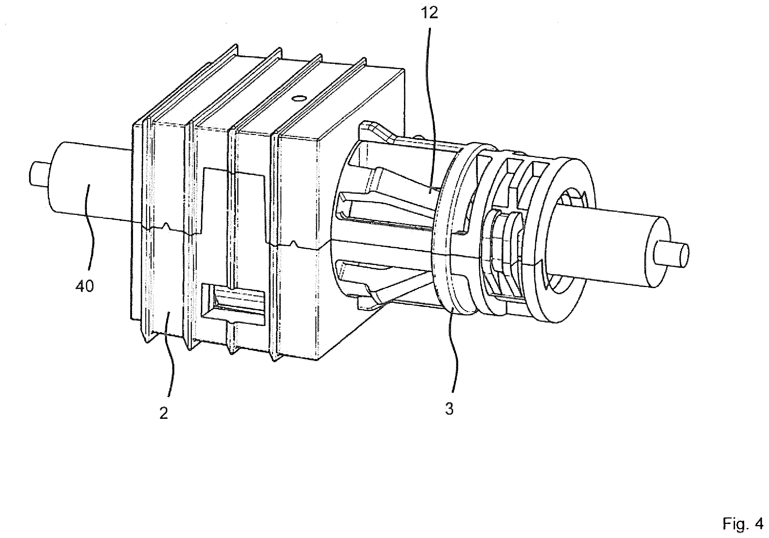

Fig. 4 zeigt eine perspektivische Darstellung einer Anordnung mit der Kabeldurchführung 1 und einem hierin aufgenommenen Kabel 40.

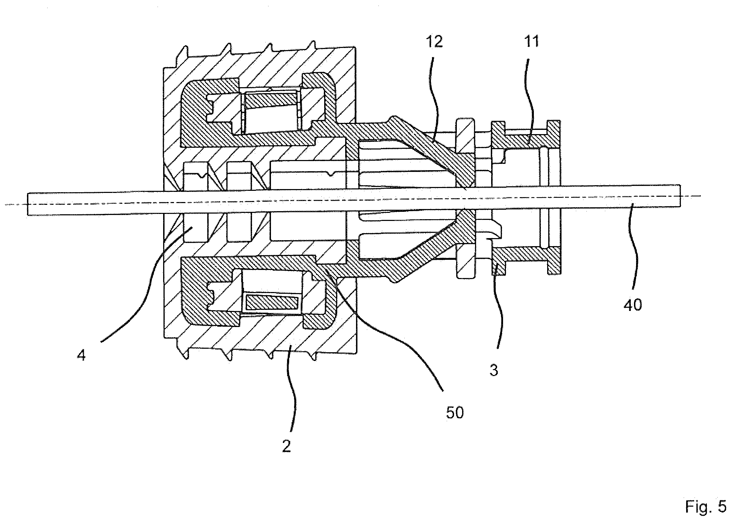

Fig. 5 zeigt eine Schnittdarstellung der Anordnung aus Fig. 4. Es ergibt sich, dass die Zugentlastung 3 im Bereich des Dichtelements 2 einen Verankerungsabschnitt 50 aufweist, an dem die Zugentlastungsklauen 12 einstückig angeformt ist, wobei der Verankerungsabschnitt 50 im Wesentlichen vollständig von der Kunststoff-Weichkomponente umschlossen ist. Wird die Kabeldurchführung 1, 20 in einem Zwei-Komponenten-Spritzgießverfahren hergestellt, ist der Verankerungsabschnitt 50, zumindest zum Teil von der Kunststoffweich-Komponente umspritzt.

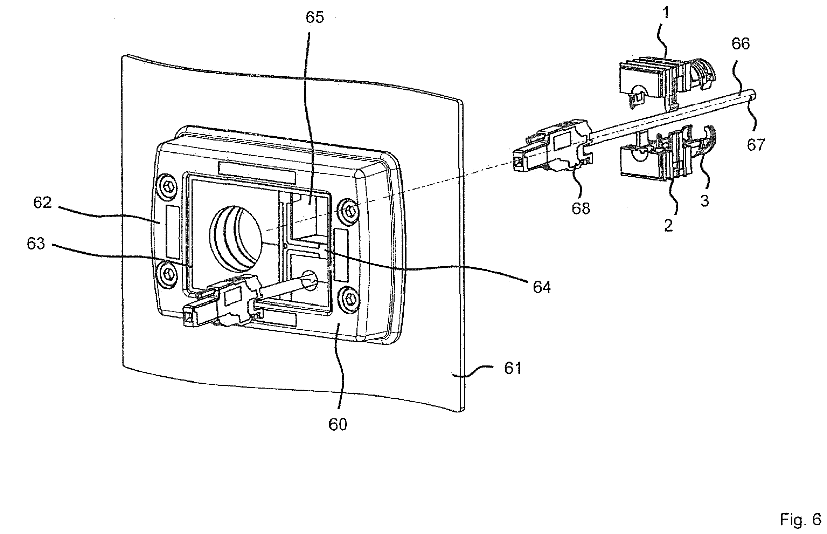

Fig. 6 zeigt eine schematische perspektivische Darstellung einer Anordnung mit einer Wanddurchführung 60, die an einem Durchbruch einer Gehäusewand 61 angeordnet ist. Die Wanddurchführung 60 weist einen Rahmen 62 auf, in welchem ein Aufnahmeraum 63 gebildet ist, der ein Rasterbauteil 64 aufnimmt, mit dem mehrere Aufnahmen 65 für ein oder mehrere Dichtabschnitte 2 von Kabeldurchführungen bereitgestellt sind. In dem Aufnahmeraum 63 wird dann der Dichtabschnitt 2 der Kabeldurchführung 1 dichtend aufgenommen, sodass das vorkonfektionierte Kabel 66 mit Kabel 67 und hieran montiertem Bauelement 68 dichtend durch die Gehäusewand 61 hindurchgeführt werden können.

Der Rahmen 62 ist auf die Gehäusewand 61 auf einer Seite aufgesetzt und ermöglicht eine Montage der Kabeldurchführungen von der gegenüberliegenden Seite.

Die in der vorstehenden Beschreibung, den Schutzansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Anordnung für eine Kabelwanddurchführung, mit einer Kabeldurchführung (1; 20), aufweisend:
- einen Dichtabschnitt (2) aus einer Kunststoff-Weichkomponente, welcher in Längsrichtung einen Durchbruch (4) zum dichtenden Aufnehmen eines durch eine Gehäusewand durchzuführenden Kabels aufweist;
**gekennzeichnet durch**:
- eine Zugentlastung (3) aus einer Kunststoff-Hartkomponente, die an den Dichtabschnitt (2) einstückig angeformt ist und in Längsrichtung einen Durchgang (5) für das durchzuführende Kabel aufweist, welcher mit dem Durchbruch (4) fluchtet; und
- eine Schlitzung (6), die sich in Längsrichtung der Kabeldurchführung (1; 20) über den Dichtabschnitt (2) und die Zugentlastung (3) erstreckt und durch die das durchzuführende Kabel von außerhalb in dem Durchbruch (4) und dem Durchgang (5) aus einer Richtung quer zur Längsrichtung eingeführt werden kann.

2. Anordnung nach Anspruch 1, **dadurch gekennzeichnet, dass** die Kabeldurchführung (1; 20) mehrteilig ausgeführt ist, derart, dass Bauteilhälften (7a, 7b) der Kabeldurchführung (1; 20) jeweils eine Hälfte des Dichtabschnitts (2) und eine hiermit einstückig verbundene Hälfte der Zugentlastung (3) aufweisen.

3. Anordnung nach Anspruch 2, **dadurch gekennzeichnet, dass** die Bauteilhälften (7a, 7b) mittels einer Steckverbindung lösbar miteinander verbunden sind.

4. Anordnung nach Anspruch 3, **dadurch gekennzeichnet, dass** zum Ausbilden der Steckverbindung einander zugeordnete Steckverbinder (21a, 21; 22a, 22b) an dem Dichtabschnitt (2) und / oder an der Zugentlastung (3) angeordnet sind.

5. Anordnung nach Anspruch 4, **dadurch gekennzeichnet, dass** die einander zugeordneten Steckverbinder (21a, 21b; 22a, 22b) aus der Kunststoff-Hartkomponente gebildet sind.

6. Anordnung nach mindestens einem der vorangehenden Ansprüche, **dadurch gekennzeichnet, dass** die Bauteilhälften (7a, 7b) mittels einer Scharnierverbindung schwenkbar miteinander verbunden sind.

7. Anordnung nach mindestens einem der vorangehenden Ansprüche, **dadurch gekennzeichnet, dass** die Kabeldurchführung (1; 20) als ein Zwei-Komponenten-Spritzgussbauteil ausgeführt ist.

8. Anordnung nach mindestens einem der vorangehenden Ansprüche, **dadurch gekennzeichnet, dass** ein Verankerungsabschnitt (50) der Zugentlastung (3) an dem Dichtabschnitt (2) angeordnet und dort wenigstens teilweise von der Kunststoff-Weichkomponente eingeschlossen ist.

9. Anordnung nach Anspruch 8, **dadurch gekennzeichnet, dass** der Verankerungsabschnitt (50) im Dichtabschnitt (2) den Durchbruch (4) radial umgreift.

10. Anordnung nach Anspruch 8 oder 9, soweit auf Anspruch 4 rückbezogen, **dadurch gekennzeichnet, dass** zumindest ein Teil der einander zugeordneten Steckverbinder (21a, 21b) im Dichtabschnitt (2) an dem Verankerungsabschnitt (50) angeformt ist.

11. Anordnung nach mindestens einem der vorangehenden Ansprüche, **dadurch gekennzeichnet, dass** die Zugentlastung (3) um den Durchgang (5) herum angeordnete Zugentlastungsklauen (12) aufweist.

12. Anordnung nach Anspruch 11, **dadurch gekennzeichnet, dass** sich die Zugentlastungsklauen (12) auf einer vom Durchgang (5) abgewandten Rückseite auf einem Versteifungselement der Zugentlastung (3) abstützen.

13. Anordnung nach Anspruch 11 oder 12, **dadurch gekennzeichnet, dass** die Zugentlastungsklauen (12) mittels eines Anschlags an einem zugeordneten nachgebenden Stützelement (30) aus der Kunststoff-Weichkomponente gegen ein Aufweiten des Durchgangs (5) im Bereich der Zugentlastungsklauen (12) vorgespannt sind.

14. Anordnung nach mindestens einem der vorangehenden Ansprüche, **dadurch gekennzeichnet, dass** der Dichtabschnitt (2) in einem Durchbruch einer Gehäusewand (61) angeordnet ist.

15. Anordnung nach mindestens einem der vorangehenden Ansprüche, **dadurch gekennzeichnet, dass** in der Kabeldurchführung (1; 20) ein konfektioniertes Kabel (66) angeordnet ist, welches sich durch den Durchbruch (4) des Dichtabschnitts (2)und den Durchgang (5) der Zugentlastung (3) erstreckt.

## Claims

1. Arrangement for a through the wall cable feedthrough, with a cable bushing (1; 20) having:
- a sealing portion (2) made from a soft plastic component, which has an opening (4) in the longitudinal direction for receiving a cable that is to be passed through a housing wall in sealed manner;
**characterized by**:
- a strain relief (3) made from a hard plastic component, which is formed integrally with the sealing portion (2) and has a passage (5) in longitudinal direction for the cable that is to pass through, which passage (5) is aligned with the opening (4); and
- a slit (6) which extends in longitudinal direction of the cable bushing (1, 20) along the sealing portion (2) and the strain relief (3) and through which the cable that is to pass through can be inserted in the opening (4) and the passage (5) from outside from a direction transverse to the longitudinal direction.

2. The arrangement according to claim 1, **characterized in that** the cable bushing (1; 20) is constructed in multiple parts in such manner that component halves (7a, 7b) of the cable bushing (1; 20) each have one half of the sealing portion (2) and one half of the strain relief (3) which is connected integrally thereto.

3. The arrangement according to claim 2, **characterized in that** the component halves (7a, 7b) are connected to each other detachably by means of a plug connection.

4. The arrangement according to claim 3, **characterized in that** plug connectors (21a, 21; 22a, 22b) which are assigned to each other are arranged on the sealing portion (2) and/or on the strain relief (3) in order to form the plug connection.

5. The arrangement according to claim 4, **characterized in that** the plug connectors (21a, 21b; 22a, 22b) which are assigned to each other are made from the hard plastic component.

6. The arrangement according to at least one of the preceding claims, **characterized in that** the component halves (7a, 7b) are connected to each other pivotably by means of a hinge connection.

7. The arrangement according to at least one of the preceding claims, **characterized in that** the cable bushing (1; 20) is designed as a two-component, injection-moulded part.

8. The arrangement according to at least one of the preceding claims, **characterized in that** an anchoring portion (50) of the strain relief (3) is arranged on the sealing portion (2) and is at least partially enclosed there by the soft plastic component.

9. The arrangement according to claim 8, **characterized in that** the anchoring portion (50) in the sealing portion (2) surrounds the opening (4) radially.

10. The arrangement according to claim 8 or 9 if referring to claim 4, **characterized in that** at least a part of the connectors (21a, 21b) assigned to each other is formed on the anchoring portion (50) in the sealing portion (2).

11. The arrangement according to at least one of the preceding claims, **characterized in that** the strain relief (3) has strain relief claws (12) arranged around the passage (5).

12. The arrangement according to claim 11, **characterized in that** the strain relief claws (12) are supported on a stiffening element of the strain relief (3) on a rear side facing away from the passage (5).

13. The arrangement according to claim 11 or 12, **characterized in that** the strain relief claws (12) are biased against a widening of the passage (5) in the region of the strain relief claws (12) by means of a stop on an associated yielding support element (30) made from the soft plastic component.

14. The arrangement according to at least one of the preceding claims, **characterized in that** the sealing portion (2) is arranged in an opening in a housing wall (61).

15. The arrangement according to at least one of the preceding claims, **characterized in that** a prefabricated cable (66) that extends through the opening (4) of the sealing section (2) and the passage (5) of the strain relief (3) is arranged in the cable bushing (1; 20).

## Revendications

1. Ensemble, destiné à une traversée murale pour câble, pourvu d'un passe-câble (1 ; 20), comportant :
- un segment d'étanchéité (2) en un composant en une matière plastique souple, qui comporte dans la direction longitudinale un ajour (4), destiné à recevoir de manière étanche un câble qui doit être tiré à travers une paroi de boîtier ;
**caractérisé par** :
- une décharge de traction (3) en un composant en une matière plastique dure, qui est formée en monobloc sur le segment d'étanchéité (2) et qui comporte dans la direction longitudinale un passage (5) pour un câble qui doit être tiré à travers, lequel est aligné sur l'ajour (4) ; et
- une fente (6), qui dans la direction longitudinale du passe-câble (1 ; 20) s'étend pardessus le segment d'étanchéité (2) et la décharge de traction (3) et par laquelle, le câble qui doit être tiré à travers peut s'introduire à partir de l'extérieur dans l'ajour (4) et dans le passage (5), à partir d'une direction transversale à la direction longitudinale.

2. Ensemble selon la revendication 1, **caractérisé en ce que** le passe-câble (1 ; 20) est conçu en plusieurs parties, de telle sorte que des moitiés d'élément (7a, 7b) du passe-câble (1 : 20) comportent chacune une moitié du segment d'étanchéité (2) et une moitié assemblée en monobloc avec celle-ci de la décharge de traction (3).

3. Ensemble selon la revendication 2, **caractérisé en ce que** les moitiés d'élément (7a, 7b) sont assemblées l'une à l'autre de manière amovible au moyen d'un assemblage enfichable.

4. Ensemble selon la revendication 3, **caractérisé en ce que** pour créer l'assemblage enfichable, des connecteurs (21a, 21 ; 22a, 22b) mutuellement associés sont placés sur le segment d'étanchéité (2) et/ou sur la décharge de traction (3).

5. Ensemble selon la revendication 4, **caractérisé en ce que** les connecteurs (21a, 21b ; 22a, 22b) mutuellement associés sont formés dans le composant en une matière plastique dure.

6. Ensemble selon au moins l'une quelconque des revendications précédentes, **caractérisé en ce que** les moitiés d'élément (7a, 7b) sont assemblées l'une à l'autre de manière pivotante au moyen d'un assemblage par charnière.

7. Ensemble selon au moins l'une quelconque des revendications précédentes, **caractérisé en ce que** le passe-câble (1 ; 20) est réalisé sous la forme d'un élément bicomposants moulé par injection.

8. Ensemble selon au moins l'une quelconque des revendications précédentes, **caractérisé en ce qu'**un segment d'ancrage (50) de la décharge de traction (3) est placé sur le segment d'étanchéité (2) et y est intégré au moins partiellement dans le composant en la matière plastique souple.

9. Ensemble selon la revendication 8, **caractérisé en ce que** le segment d'ancrage (50) entoure en direction radiale l'ajour (4) dans le segment d'étanchéité (2).

10. Ensemble selon la revendication 8 ou 9, si elle se réfère à la revendication 4, **caractérisé en ce qu'**au moins une partie des connecteurs (21a, 21b) mutuellement associés est formée dans le segment d'étanchéité (2) sur le segment d'ancrage (50).

11. Ensemble selon au moins l'une quelconque des revendications précédentes, **caractérisé en ce que** la décharge de traction (3) comporte des griffes de décharge de traction (12) placées autour du passage (5).

12. Ensemble selon la revendication 11, **caractérisé en ce que** les griffes de décharge de traction (12) s'appuient par une face arrière opposée au passage (5) sur un élément de renfort de la décharge de traction (3).

13. Ensemble selon la revendication 11 ou 12, **caractérisé en ce que** les griffes de décharge de traction (12) sont précontraintes au moyen d'une butée sur un élément d'appui (30) élastique associé dans le composant en la matière plastique souple contre un élargissement du passage (5) dans la zone des griffes de décharge de traction (12).

14. Ensemble selon au moins l'une quelconque des revendications précédentes, **caractérisé en ce que** le segment d'étanchéité (2) est placé dans un ajour d'une paroi de boîtier (61).

15. Ensemble selon au moins l'une quelconque des revendications précédentes, **caractérisé en ce que** dans le passe-câble (1 ; 20) est placé un câble préfabriqué (66), lequel s'étend à travers l'ajour (4) du segment d'étanchéité (2) et le passage (5) de la décharge de traction (3).
